# EUROPEAN PATENT APPLICATION

(11) **EP 4 615 167 A1**
(43) Date of publication of application: **10.09.2025**
(21) Application number: 23886027.4
(22) Date of filing: 26.09.2023
(51) Int. Cl.: H05H 1/24, C02F 1/46

(54) **FLUID PROCESSING DEVICE**

(30) Priority: 01.11.2022 KR 20220143456; 21.09.2023 KR 20230126285
(71) Applicant: K Fusion Technology Inc., Ansan-si, Gyeonggi-do 15588 (KR)
(72) Inventor: KWAK, Heon Kil, Ansan-si, Gyeonggi-do, 15588 (KR); BAHNG, Gun Woong, Yeonsu-gu, Incheon, 21982 (KR); SONG, Seong Hwan, Siheung-si, Gyeonggi-do, 15071 (KR)
(74) Representative: Fabry, Bernd
(86) International application number: PCT/KR2023/014868
(87) International publication number: WO 2024/096330

(57) **Abstract**

The present disclosure relates to a fluid processing device capable of processing a fluid by generating plasma in a flowing fluid. A fluid processing device according to one embodiment of the present invention includes: a hollow external body; a guide assembly accommodated in the external body to provide a first flow path having a shape in which a diameter is reduced in at least a portion thereof along a flow direction of a fluid and a second flow path having a shape in which a diameter expands in at least a portion thereof to collapse bubbles included in the fluid having passed through the first flow path; and a screw accommodated in the external body to be positioned upstream of the guide assembly based on the flow direction of the fluid to generate a vortex of the fluid, wherein an inner surface of the external body includes an expansion portion whose diameter gradually expands in a direction away from a far end of the guide assembly.

## Description

### [Technical Field]

The present disclosure relates to a fluid processing device, and more specifically, to a fluid processing device that may process a fluid by generating plasma in a flowing fluid.

### [Background Art]

Various technologies are being developed to convert fluids such as water into fluids with specific functions through electrolysis, magnetic treatment, ultrasonic treatment, plasma treatment, or the like.

For example, a fluid processing technology is known that generates plasma in the air or in water and then dissolves active species such as oxygen and nitrogen in water to create plasma activated water (PAW).

The plasma activated water is highly acidic and may act as a disinfectant or pesticide, and may also be used as a liquid fertilizer because the plasma activated water contains a large amount of nitrogen oxides. In addition, the plasma activated water may be used to sterilize medical tools in hospitals or treat the skin of patients, and may be used as an eco-friendly detergent for washing vegetables or fruits at home.

In order to produce plasma activated water, a technology to generate plasma is basically required to ionize water.

Conventionally, a method has been mainly used to produce the plasma activated water by discharging electrodes placed in water to instantly generate plasma and ionizing water through the plasma.

However, this method requires high voltage, and it is very difficult to stably maintain the gas required to generate plasma in water, so the production efficiency is low. In addition, there is a problem that high costs are incurred in order to set up production facilities.

In addition, a method of producing the plasma activated water by generating plasma on the surface of water rather than in water and allowing the water and plasma to react with each other is also known.

However, this method produces very small amounts of ionized activated water compared to the time it takes to generate plasma because the current flows along the surface of the water when generating plasma. In addition, there is a problem that high maintenance costs are incurred because plasma must be generated for a long time to produce a large amount of ionized activated water.

### [Disclosure]

### [Technical Problem]

The present disclosure has been made in consideration of the above points, and an object of the present disclosure is to provide a fluid processing device that may generate plasma in a fluid by frictionally charging the flowing fluid without an external power source or electrode, thereby ionizing and processing the fluid.

The problems of the present disclosure are not limited to the problems mentioned above, and other problems not mentioned may be clearly understood by those skilled in the art from the description below.

### [Technical Solution]

In order to solve the problems described above, a fluid processing device according to one embodiment includes: a hollow external body; a guide assembly accommodated in the external body to provide a first flow path having a shape in which a diameter is reduced in at least a portion thereof along a flow direction of a fluid and a second flow path having a shape in which a diameter expands in at least a portion thereof to collapse bubbles included in the fluid having passed through the first flow path; and a screw accommodated in the external body to be positioned upstream of the guide assembly based on the flow direction of the fluid to generate a vortex of the fluid, in which an inner surface of the external body includes an expansion portion whose diameter gradually expands in a direction away from a far end of the guide assembly.

The expansion portion may be formed in a curved shape.

A first expansion portion connecting portion and a second expansion portion connecting portion having a curved shape may be respectively provided on both end portions of the expansion portion.

A curved round portion may be provided around an edge of the far end of the guide assembly adjacent to the expansion portion.

The round portion may be configured in a curved surface having a curvature radius of 0.5 to 5 mm.

The guide assembly may include an inclined portion whose outer diameter is gradually reduced along the flow direction of the fluid, and the external body may include a contact portion that protrudes from the inner surface of the external body and is in contact with the inclined portion to restrain a movement of the guide assembly so as not to move in the flow direction of the fluid.

The contact portion may be configured in a shape whose inner diameter is gradually reduced along the flow direction of the fluid so as to come into contact with the inclined portion.

A first inclined portion connecting portion having a convex curved surface having a first curvature radius may be provided in one end portion of the inclined portion, a second inclined portion connecting portion having a concave curved surface having a second curvature radius may be provided in the other end portion of the inclined portion, and a first contact portion connecting portion having a concave curved surface having the first curvature radius is provided in one end portion of the contact portion to come into contact with the first inclined portion connecting portion, and a second contact portion connecting portion having a convex curved surface having the second curvature radius is provided in the other end portion of the contact portion.

The first curvature radius may be 1 to 20 mm.

The first flow path may include a focusing flow path in which the fluid passing through the screw is introduced and whose diameter is gradually reduced along the flow direction of the fluid, and an inlet flow path which is connected to a far end of the focusing flow path so that the fluid is introduced from the focusing flow path and has a diameter equal to a diameter of the far end of the focusing flow path.

The second flow path may include an expansion flow path connected to the inlet flow path so that the fluid is introduced from the inlet flow path and having a diameter larger than the diameter of the inlet flow path, and a reduction flow path connected to the expansion flow path so that the fluid is introduced from the expansion flow path and having a diameter smaller than the diameter of the expansion flow path.

The guide assembly may include a connection flow path which is connected to the first flow path so that the fluid passing through the first flow path is introduced and of which a diameter is gradually expanded along the flow direction of the fluid, and a discharge flow path may be provided inside the external body, the discharge flow path being connected to the connection flow path so that the fluid passing through the connection flow path is introduced and having a diameter is larger than the diameter of the expansion flow path and the diameter of the connection flow path.

Preferably, an expanding inclination angle of the connection flow path is greater than 0 degrees and smaller than 80 degrees.

The guide assembly may be made of a material that frictionally charges the fluid with a positive charge.

A fluid processing device according to one embodiment of the present disclosure may further include an accelerator that is accommodated in the external body and promotes the collapse of bubbles contained in the fluid.

The accelerator may be formed in the shape of a metal ring.

Meanwhile, in order to solve the problems described above, a fluid processing device according to another embodiment of the present disclosure includes: a hollow external body; a first body that includes a screw and a first fluid flow path which guides a flow of fluid passing through the screw and has a shape in which the diameter is reduced at least in a portion along a flow direction of the fluid, and that is accommodated in the external body; a second body that is connected to the first body and includes a second fluid path having a relatively larger diameter than one end of the first fluid path to provide a change in pressure to the fluid passing through the first fluid path; and a third body including a third fluid path that is connected to the second body, formed of a material having higher electrical conductivity than the second body, and has a third fluid path having a relatively smaller diameter than the second fluid path to provide a change in pressure to the fluid passing through the second fluid path, in which an expansion portion positioned downstream from the third body based on the flow direction of the fluid and having a shape in which a diameter is gradually expands is provided on an inner surface of the external body.

The fluid processing device according to another embodiment of the present disclosure may further include a fourth body connected to the third body and having a fourth fluid path into which the fluid passing through the third fluid path is introduced, in which a curved round portion may be provided around an edge of a far end of the fourth body adjacent to the expansion portion.

The round portion may be configured in a curved shape having a curvature radius of 0.5 to 5 mm.

The fluid processing device according to another embodiment of the present disclosure may further include a fourth body connected to the third body and having a fourth fluid path into which the fluid passing through the third fluid path is introduced, in which at least a portion of the fourth fluid path may be formed in a shape in which a diameter gradually expands along the flow direction of the fluid, and an expanding inclination angle of the expanded portion of the fourth fluid path may be greater than 0 degrees and less than 80 degrees.

### [Advantageous Effects]

According to the fluid processing device according to the present disclosure, it is possible to ionize or decompose the fluid by generating a large number of fine bubbles with high negative charge density at an interface through a cavity phenomenon of the flowing fluid and friction charging, and collapsing the bubbles in the fluid to generate plasma.

In addition, according to the fluid processing device according to the present disclosure, it is possible to ionize or decompose the fluid without an external power source or electrode, and efficiently process the fluid with little energy.

In addition, according to the fluid processing device according to the present disclosure, it is possible to mass-produce functional water or activated water with little input cost.

The various advantageous advantages and effects of the present disclosure are not limited to the above-described contents, and more diverse effects are included in the present specification.

### [Description of Drawings]

FIG. 1 schematically illustrates a fluid processing system including a fluid processing device according to one embodiment of the present disclosure.
FIG. 2 is a cross-sectional view illustrating the fluid processing device according to one embodiment of the present disclosure.
FIG. 3 is an enlarged view of a portion of FIG. 2.
FIG. 4 is a cross-sectional view illustrating an external body of the fluid processing device according to one embodiment of the present disclosure.
FIG. 5 is a separate view illustrating a portion of the fluid processing device according to one embodiment of the present disclosure.
FIG. 6 is a view illustrating a second guide of the fluid processing device according to one embodiment of the present disclosure.
FIG. 7 is a view illustrating a second guide according to another embodiment.
FIG. 8 is a cross-sectional view illustrating a fluid processing device according to another embodiment of the present disclosure.
FIG. 9 is an enlarged view of a portion of FIG. 8.
FIG. 10 is a separate view illustrating a portion of the fluid processing device illustrated in FIG. 8.

### [Best Mode]

Hereinafter, a fluid processing device according to the present disclosure will be described in detail with reference to the drawings.

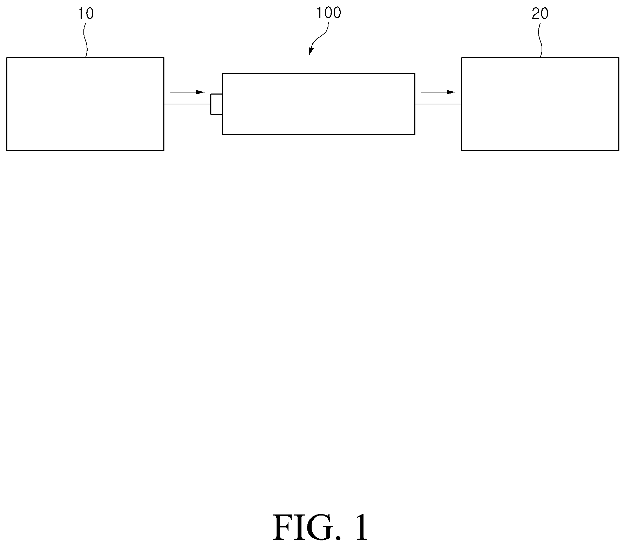

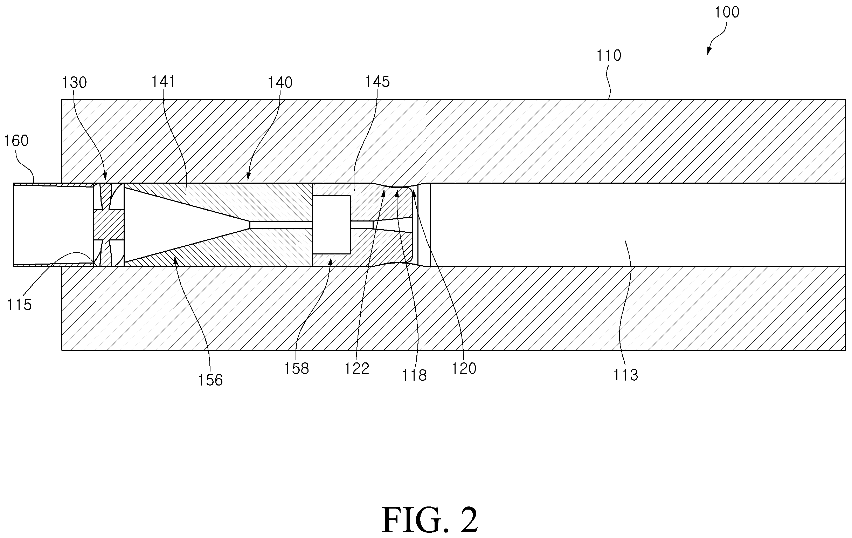

FIG. 1 is a schematic diagram of a fluid processing system including a fluid processing device according to one embodiment of the present disclosure, and FIG. 2 is a cross-sectional diagram illustrating the fluid processing device according to one embodiment of the present disclosure.

A fluid processing device 100 according to one embodiment of the present disclosure may receive a fluid from a fluid supply device 10, frictionally charge a flowing fluid without an external power source or electrode to generate plasma within the fluid, and ionize and process the fluid through this. The fluid processed by the fluid processing device 100 may be stored in a fluid storage device 20.

The fluid processing device 100 according to one embodiment of the present disclosure may process various fluids. For example, the fluid processing device 100 according to one embodiment of the present disclosure may process water with plasma to generate plasma activated water rich in hydronium ions (H₃O⁺). The fluid supply device 10 supplies water required to create the plasma activated water to the fluid processing device 100, and the fluid storage device 20 may store the plasma activated water generated by the fluid processing device 100. The water supplied to the fluid processing device 100 may be pretreated water with foreign substances removed, thus having low electrical conductivity and high electrical resistance.

As illustrated in the drawings, the fluid processing device 100 according to one embodiment of the present disclosure includes an external body 110, a screw 130 accommodated inside the external body 110, and a guide assembly 140.

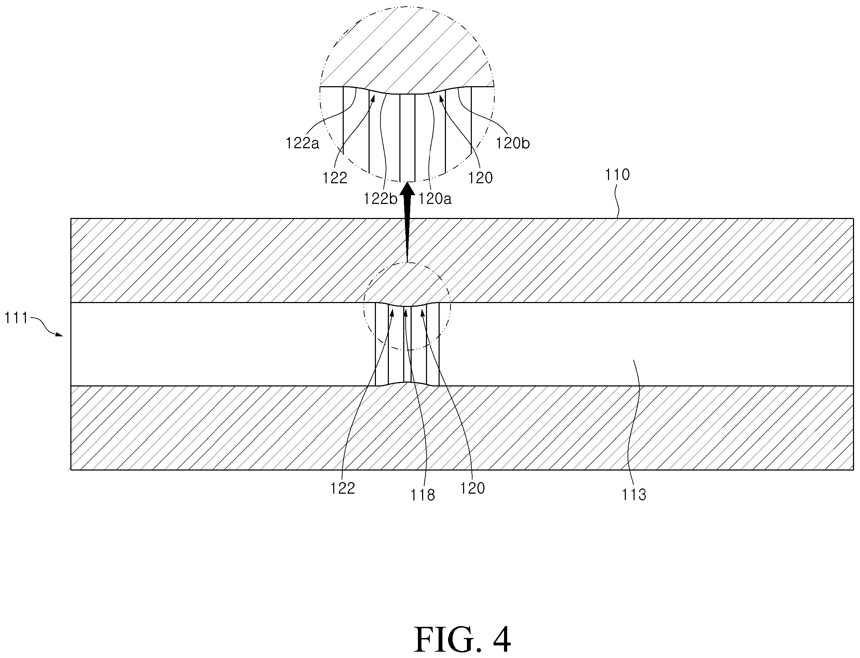

The external body 110 is formed as a hollow body that may accommodate the screw 130 and the guide assembly 140. As illustrated in FIGS. 2 to 4, a through hole 111 that penetrates the external body 110 in the longitudinal direction is formed inside the external body 110. The through hole 111 may form a fluid flow path through which the fluid may flow. The screw 130 and the guide assembly 140 are accommodated in the through hole 111. In addition, at least a part of a connecting tube 160 for guiding the fluid to the screw 130 may be accommodated in the through hole 111.

A portion of the through hole 111 between the guide assembly 140 and the connecting tube 160 forms an entry flow path 115 connecting the guide assembly 140 and the connecting tube 160 so that the fluid may flow, and the screw 130 is disposed in the entry flow path 115. In addition, another portion of the through hole 111 forms a discharge flow path 113 through which the fluid passing through the guide assembly 140 may flow. The discharge flow path 113 is wider than the flow paths provided in the guide assembly 140.

A ledge 118 is provided inside the external body 110 to restrict the movement of the guide assembly 140. The ledge 118 protrudes from the inner surface of the external body 110. The ledge 118 may restrict the movement of the guide assembly 140 by being in contact with the end portion of the guide assembly 140 so that the guide assembly 140 may not move in a flow direction A of the fluid. The ledge 118 may be formed in a ring shape or various other shapes that may be in contact with the end portion of the guide assembly 140.

The ledge 118 includes an expansion portion 120 and a contact portion 122. The contact portion 122 is disposed upstream of the expansion portion 120 based on the flow direction A of the fluid to be in contact with the guide assembly 140.

The expansion portion 120 is formed as a curved shape whose diameter gradually increases in a direction away from the far end of the guide assembly 140. A first expansion portion connecting portion 120a and a second expansion portion connecting portion 120b are respectively provided at both ends of the expansion portion 120. The first expansion portion connecting portion 120a is disposed upstream of the second expansion portion connecting portion 120b based on the flow direction A of the fluid. The first expansion portion connecting portion 120a may be formed as a convex curved surface having a constant curvature radius. The second expansion portion connecting portion 120b may be formed as a concave curved surface having a constant curvature radius. The curvature radius of the first expansion portion connecting portion 120a and the curvature radius of the second expansion portion connecting portion 120b may be the same or different. The second expansion portion connecting portion 120b may be connected to the inner surface of the external body 110 that demarcates the perimeter of the discharge flow path 113 at a gentle slope.

The expansion portion 120 may form a flow path that is expanded at a gentle slope between the guide assembly 140 and the discharge flow path 113. When there is a corner on the inner surface of the external body 110 that the fluid comes into contact with, a problem of electric charges being concentrated at the corner may occur. The fluid processing device 100 according to the present disclosure may reduce the problem of electric charges being concentrated between the guide assembly 140 and the discharge flow path 113, or damage or breakage of the external body 110 or the guide assembly 140 due to the concentration of electric charges by providing the expansion portion 120 between the guide assembly 140 and the discharge flow path 113.

The contact portion 122 is formed in a shape in which the inner diameter gradually decreases along the flow direction of the fluid to be in stable contact with the guide assembly 140. A first contact portion connecting portion 122a and a second contact portion connecting portion 122b are respectively provided at both end portions of the contact portion 122. The first contact portion connecting portion 122a is disposed upstream of the second contact portion connecting portion 122b based on the flow direction A of the fluid. The first contact portion connecting portion 122a may be formed in a concave curved shape having a constant curvature radius. The second contact portion connecting portion 122b may be formed in a convex curved shape having a constant curvature radius. For example, the first contact portion connecting portion 122a may be formed as a curved surface having an arbitrary first curvature radius, and the second contact portion connecting portion 122b may be formed as a curved surface having an arbitrary second curvature radius. The first curvature radius and the second curvature radius may be the same or different.

The first curvature radius may have a value of 1 to 20 mm. When the first curvature radius is less than 1 mm, the contact portion 122 may protrude at a sharp angle from the inner surface of the external body 110. In this case, the size of the contact portion 122 or the length of the contact portion 122 (the length extending in the flow direction of the fluid) becomes relatively small. Therefore, the pressure applied to the contact portion 122 from the guide assembly 140 by the fluid pressure is concentrated in a relatively small area, which increases the risk of the contact portion 122 being damaged. In addition, the contact area between the contact portion 122 and the guide assembly 140 may become small, causing a problem in which the contact portion 122 does not stably support the guide assembly 140.

Meanwhile, when the first curvature radius exceeds 20 mm, the length of the contact portion 122 (the length extending in the flow direction of the fluid) may become excessively long, and the support force of the contact portion 122 may become weak. In this case, a problem may occur in which the guide assembly 140 is pushed closer to the discharge flow path 113 than the designed dimension due to the pressure of the fluid applied to the guide assembly 140.

The curvature radius of the first contact portion connecting portion 122a is not limited to the above dimensions, and may be variously changed depending on the outer diameter of the guide assembly 140 or the inner diameter size of the external body 110.

The external body 110 is made of an insulating material. For example, the external body 110 may be made of a synthetic resin material such as acrylic, engineering plastic, or various dielectrics.

Referring to FIGS. 2, 3, and 5, the screw 130 is positioned upstream of the guide assembly 140 based on the flow direction A of the fluid, and may swirl the fluid to flow to the guide assembly 140. It is preferable that the screw 130 be made of a material that is easily frictionally charged with a negative charge, that is, a material that may frictionally charge the fluid with a positive charge. For example, the screw 130 may be made of a synthetic resin material such as acrylic, engineering plastic, or various dielectrics.

The screw 130 has a blade 131 for generating a vortex in the fluid. The blade 131 may be formed in a form that may swirl the fluid to generate a vortex. Therefore, the fluid passing through the blade 131 may flow in a swirling manner. When the fluid passes through the screw 130 rapidly, a cavity phenomenon occurs due to a rapid change in fluid pressure, which causes fine bubbles (B, for example, having a diameter of 50 µm or less) to be generated in the fluid. In addition, the fluid may be frictionally charged with a positive charge when the fluid passes through the screw 130 rapidly. The screw 130 may be referred to as a vortex guide.

The screw 130 may be fixed to the entry flow path 115 between the guide assembly 140 and the connecting tube 160 in various ways, such as being pressed into the external body 110 or being fixed by being caught between the guide assembly 140 and the connecting tube 160. Therefore, the screw 130 may swirl the fluid without rotating. When the screw 130 is rotated by the flowing fluid, the frictional charging efficiency between the fluid and the screw 130 may decrease. In contrast, the fluid processing device 100 according to one embodiment of the present disclosure may increase the frictional charging efficiency of the fluid by guiding the fluid in a state where the screw 130 is fixed.

In the drawings, the screw 130 is illustrated to have a diameter corresponding to the diameter of the entry flow path 115, but the screw 130 may have a diameter smaller than the diameter of the entry flow path 115.

The guide assembly 140 is located downstream of the screw 130 based on the flow direction A of the fluid. The guide assembly 140 may provide a first flow path 156 and a second flow path 158 through which the fluid passes. In the present specification, the first flow path 156 may be referred to as a bubble forming flow path 156, and the second flow path 158 may be referred to as a reaction flow path 158. The bubble forming flow path 156 is configured to form bubbles B in the fluid flowing along the flow path 156. The reaction flow path 158 is configured to collapse bubbles B included in the fluid flowing along the flow path 158. The first flow path 156 is disposed upstream of the second flow path 158 based on the flow direction A of the fluid.

The guide assembly 140 includes a first guide 141 and a second guide 145. The first guide 141 and the second guide 145 are disposed sequentially along the flow direction A of the fluid. It is preferable that the first guide 141 and the second guide 145 are made of a material that is easily frictionally charged with a negative charge, that is, a material that may frictionally charge the fluid with a positive charge. For example, the first guide 141 and the second guide 145 may be made of a synthetic resin material such as acrylic, engineering plastic, or various dielectrics.

The first guide 141 may be disposed in contact with the screw 130 or adjacent to the screw 130 so that the fluid passing through the screw 130 may be introduced. The first guide 141 includes a focusing flow path 142 and an inlet flow path 143. The focusing flow path 142 is formed in a form in which the diameter gradually decreases along the flow direction A of the fluid. The focusing flow path 142 may guide the fluid passing through the screw 130 to the inlet flow path 143. That is, the fluid may flow along the focusing flow path 142 and be concentrated in the inlet flow path 143. The inlet flow path 143 is connected to the focusing flow path 142 so that the fluid may be introduced from the focusing flow path 142. The inlet flow path 143 is narrower than the focusing flow path 142, thereby increasing the flow velocity of the fluid, thereby increasing the frictional charging effect. At the part where the focusing flow path 142 and the inlet flow path 143 are connected, the diameter of the focusing flow path 142 and the diameter of the inlet flow path 143 are the same.

The first guide 141 may provide the first flow path 156. That is, the focusing flow path 142 and the inlet flow path 143 of the first guide 141 form the first flow path 156 together with the entry flow path 115 that accommodates the screw 130. The fluid may flow while generating a vortex in the first flow path 156 and may be frictionally charged with a positive charge due to friction with the screw 130 and the first guide 141. In this case, the screw 130 and the first guide 141 may be negatively charged. In addition, when the fluid passes through the first flow path 156, fine bubbles B are generated in the fluid due to the cavity phenomenon. When the fluid is positively charged, negative charges are concentrated at the interface of the bubbles B in the fluid.

When the fluid passes through the first flow path 156, a large amount of bubbles B are generated in the fluid, but the area where the bubbles B are generated in the fluid is not limited to the first flow path 156. That is, the bubbles B may be generated in the fluid even when the fluid passes through the second flow path 158.

The second guide 145 may be disposed in contact with the first guide 141 or adjacent to the first guide 141 so that the fluid passing through the first guide 141 is introduced. The second guide 145 has an expansion flow path 146, a reduction flow path 147, and a connection flow path 148.

The expansion flow path 146 is connected to the inlet flow path 143 of the first guide 141. The fluid passing through the inlet flow path 143 flows into the expansion flow path 146. The diameter of the expansion flow path 146 is larger than the diameter of the inlet flow path 143. The fluid passing through the narrow inlet flow path 143 flows into the expansion flow path 146 and the pressure decreases, and the bubbles B in the fluid may expand in the expansion flow path 146.

The reduction flow path 147 is connected to the expansion flow path 146. The diameter of the reduction flow path 147 is smaller than the diameter of the expansion flow path 146. Therefore, the fluid passing through the expansion flow path 146 flows into the reduction flow path 147 and the pressure increases, and the bubbles B in the fluid may be reduced in the reduction flow path 147. The connection flow path 148 connects the reduction flow path 147 and the discharge flow path 113.

The connection flow path 148 is connected to the reduction flow path 147. The connection flow path 148 is formed in a shape in which the diameter thereof gradually expands along the flow direction A of the fluid. The diameter of the part of the connection flow path 148 connected to the reduction flow path 147 is the same as the diameter of the reduction flow path 147, and the diameter of the part of the connection flow path 148 connected to the discharge flow path 113 is larger than the diameter of the reduction flow path 147. In addition, the diameter of the part of the connection flow path 148 connected to the discharge flow path 113 is smaller than the diameter of the discharge flow path 113. The connection flow path 148 is formed in a shape in which the diameter thereof gradually expands from the reduction flow path 147 toward the discharge flow path 113, thereby enabling the fluid passing through the reduction flow path 147 to be discharged more smoothly to the discharge flow path 113.

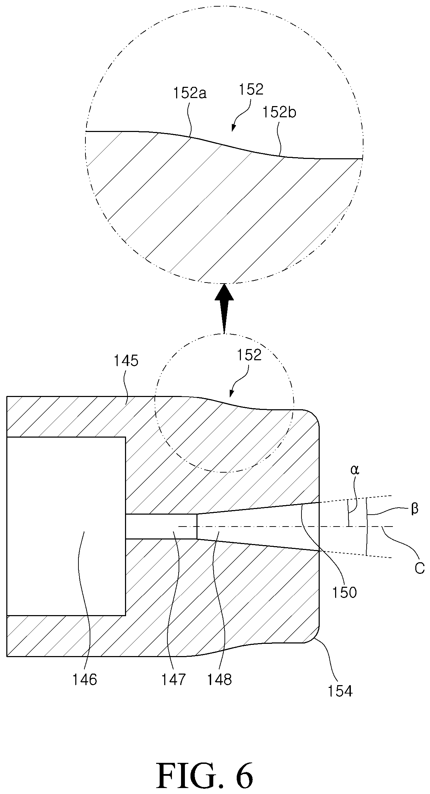

As illustrated in FIG. 6, an expanding inclination angle α of the connection flow path 148 is preferably greater than 0 degrees and less than 80 degrees. In the present specification, the expanding inclination angle α of the connection flow path 148 may be defined as a half angle of an expansion angle β of the connection flow path 148. In addition, the expanding inclination angle α of the connection flow path 148 may be defined as an angle at which an inclined surface 150 provided on the inner surface of the second guide 145 is inclined from a center line C of the connection flow path 148. The inclined surface 150 of the second guide 145 is a portion of the inner surface of the second guide 145 that demarcates the perimeter of the connection flow path 148.

When the expanded inclination angle α of the connection flow path 148 exceeds 80 degrees, the flow rate of the fluid flowing into the discharge flow path 113 through the connection flow path 148 is excessively reduced, which is not desirable.

The second guide 145 is provided with an inclined portion 152 corresponding to the contact portion 122 of the external body 110. The inclined portion 152 is provided on the outer surface of the second guide 145 in a shape in which the outer diameter gradually decreases along the flow direction A of the fluid. A first inclined portion connecting portion 152a and a second inclined portion connecting portion 152b are respectively provided at both ends of the inclined portion 152. The first inclined portion connecting portion 152a is disposed upstream of the second inclined portion connecting portion 152b based on the flow direction A of the fluid. The first inclined portion connecting portion 152a may be formed as a convex curved surface having a constant curvature radius. The second inclined portion connecting portion 152b may be formed as a concave curved surface having a constant curvature radius. For example, the first inclined portion connecting portion 152a may be formed as a curved surface having a first curvature radius, like the first contact portion connecting portion 122a of the contact portion 122, and the second inclined portion connecting portion 152b may be formed as a curved surface having a second curvature radius, like the second contact portion connecting portion 122b of the contact portion 122. Since the first inclined portion connecting portion 152a has the same curvature radius as the first contact portion connecting portion 122a, the first inclined portion connecting portion 152a may be in stable contact with the first contact portion connecting portion 122a. In addition, since the second inclined portion connecting portion 152b has the same curvature radius as that of the second contact portion connecting portion 122b, the second inclined portion connecting portion 152b may be in stable contact with the second contact portion connecting portion 122b.

The curvature radius of the first inclined portion connecting portion 152a or the second inclined portion connecting portion 152b may be changed in various ways depending on the curvature radius of the first contact portion connecting portion 122a or the second contact portion connecting portion 122b.

A curved round portion 154 is provided around the edge of the far end of the second guide 145 adjacent to the expansion portion 120 of the external body 110. When the far end of the guide assembly 140 has a sharp corner, a problem of charge concentration at the corner may occur. Therefore, by providing a round portion 154 around the edge of the far end of the second guide 145, it is possible to reduce the problem of the charge being concentrated at the far end of the second guide 145 or the second guide 145 being damaged or broken due to the charge concentration.

It is preferable that the round portion 154 has a curvature radius of 0.5 to 5 mm. When the curvature radius of the round portion 154 is less than 0.5 mm, the effect of preventing the concentration of charge is insignificant, which is not desirable. Meanwhile, when the curvature radius of the round portion 154 exceeds 5 mm, a narrow and long gap is created between the external body 110 and the second guide 145, and the fluid passing through the second guide 145 flows back into the gap, and due to this backflow, the flow of the fluid passing through the second guide 145 is likely to become uneven and unstable.

The curvature radius of the round portion 154 is not limited to the above dimensions. That is, the curvature radius of the round portion 154 may be variously changed depending on the diameter of the second guide 145 or the shape of the expansion portion 120 of the external body 110.

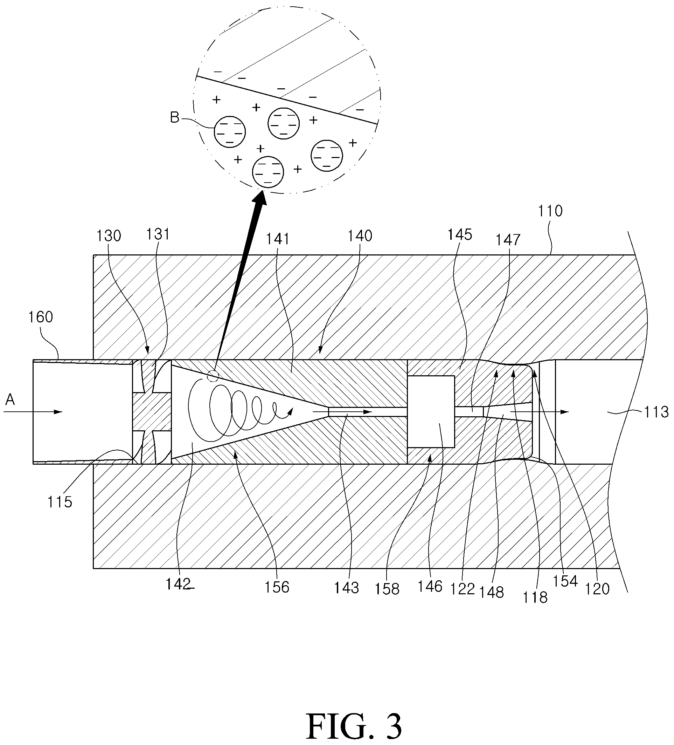

Referring to FIGS. 2 and 3, the second guide 145 may provide the second flow path 158 whose diameter is expanded in at least some sections so that a rapid pressure change of the fluid may occur. That is, the expansion flow path 146 and the reduction flow path 147 of the second guide 145 form the second flow path 158. The expansion flow path 146 may form a section of the diameter expansion in the second flow path 158. Then the fluid passes through the second flow path 158, a rapid pressure change of the fluid occurs, and bubbles B in the fluid may collapse.

When fine bubbles B with high negative charge density at the interface collapse in large quantities in a positively charged fluid, high temperature (for example, 12,000 to 14,000 K) and high pressure (for example, 3,200,000 bar) plasma is generated. Moreover, the fluid may be ionized or decomposed due to the plasma generated in the fluid. In other words, the material constituting the fluid may be chemically decomposed by the plasma generated in the fluid.

When the fluid passes through the second flow path 158, the bubbles B in the fluid collapse in large quantities, but the area where the bubbles B collapse is not limited to the second flow path 158. In other words, the collapse of the bubbles B may occur in at least a part of the first flow path 156 or a part of the discharge flow path 113.

Hereinafter, a fluid processing process by a fluid processing device 100 according to one embodiment of the present disclosure will be described in more detail.

When high-pressure fluid is supplied from the fluid supply device 10, the high-pressure fluid first passes through the first flow path 156, that is, the bubble forming flow path 156.

Specifically, the fluid first passes through the screw 130. The fluid rapidly flowing along the blade 131 of the screw 130 generates a vortex. In this case, a cavity phenomenon occurs due to a rapid change in fluid pressure, and this causes fine bubbles B to be generated in the fluid. The fluid passing through the screw 130 sequentially passes through the focusing flow path 142 and the inlet flow path 143 of the first guide 141 while generating a vortex. In this case, the fluid is frictionally charged with a positive charge, and a negative charge is concentrated on the interface of the bubbles B in the fluid.

In this way, the fluid in which bubbles B are generated while passing through the bubble forming flow path 156 flows into the second flow path 158, that is, the reaction flow path 158, and flows while causing a rapid pressure change.

Specifically, the fluid passing through the bubble forming flow path 156 first flows into the expansion flow path 146, and the pressure drops rapidly. In the expansion flow path 146, the bubbles B in the fluid may expand. Subsequently, the fluid passing through the expansion flow path 146 flows into the reduction flow path 147, and the pressure increases rapidly. In the reduction flow path 147, the bubbles B in the fluid may be reduced.

In this way, the fluid passes through the expansion flow path 146 and the reduction flow path 147 forming the reaction flow path 158 in sequence, causing a rapid pressure change. Accordingly, the bubbles B in the fluid undergo expansion and contraction processes while passing through the reaction flow path 158 and collapse in large quantities. Then, when the bubbles B collapse in large quantities, a discharge phenomenon due to positive and negative charges occurs in the fluid, and accordingly, plasma is generated in the fluid. In this case, since the plasma is accompanied by light, high heat, and high pressure, the fluid may be ionized or decomposed.

In this way, the fluid treated with plasma may pass through the connection flow path 148 and flow into the discharge flow path 113, and flow into the fluid storage device 20 from the discharge flow path 113.

When the fluid processing device 100 according to one embodiment of the present disclosure receives water from the fluid supply device 10, the fluid processing device 100 may treat the water as plasma activated water.

Specifically, when high-pressure water is supplied to the fluid processing device 100, a large amount of fine bubbles B are generated in the water by the same principle as described above, and when these bubbles B collapse, plasma is generated. In this case, as the ionization or decomposition reaction of water molecules and the bonding reaction of ions proceed in the water, a large amount of hydronium ions (H₃O⁺) and a large amount of hydrogen and oxygen nano-bubbles (for example, having a diameter of 65 nm or less) are generated. The plasma activated water containing such a large amount of hydronium ions (H₃O⁺) and a large amount of hydrogen and oxygen nano-bubbles may be utilized as a therapeutic agent, a disinfectant, a cleaning agent, or the like.

The water supplied to the fluid processing device 100 is preferably pre-treated water with low electrical conductivity and high electrical resistance due to the removal of foreign substances, or ultrapure water. The ultrapure water is water with relatively high electrical resistance due to the removal of inorganic substances or dissolved gases. The water with high electrical resistance may cause less discharge of charges before plasma is generated after frictionally charged while passing through the fluid processing device 100. In addition, water with high electrical resistance causes less discharge of charges before plasma is generated, so a more powerful plasma may be induced, and thus, the fluid may be processed more efficiently.

As described above, the fluid processing device 100 according to one embodiment of the present disclosure may ionize or decompose the fluid by generating a large amount of fine bubbles B in which negative charges are concentrated at the interface through the cavity phenomenon of the flowing fluid and friction charging, and collapsing the bubbles B in the fluid. That is, by collapsing a large number of fine bubbles B with a high negative charge density at the interface in the fluid, high-temperature and high-pressure plasma may be generated, thereby ionizing or decomposing the fluid in an electrodeless manner. Here, the electrodeless manner may mean a manner of ionizing or decomposing the fluid by utilizing the energy generated when the bubbles B in the fluid collapse without requiring an electrode for applying electric energy to the bubbles B in the fluid.

Therefore, the fluid processing device 100 according to the present embodiment may chemically decompose or ionize the fluid by generating a large number of fine bubbles B using the cavity phenomenon of the flowing fluid, collapsing a large number of fine bubbles B with a negative charge concentrated at the interface, and generating plasma by the discharge of the charge. That is, by collapsing a large number of fine bubbles B with a high negative charge density at the interface in a positively charged fluid, high-temperature and high-pressure plasma may be generated, thereby ionizing or decomposing the fluid in an electrodeless manner. Therefore, it is possible to ionize or decompose the fluid without an external power source or electrode, and efficiently process the fluid with less energy.

The specific configuration of the fluid processing device 100 is not limited to the form described and illustrated above.

For example, the specific configuration of the guide assembly 140 for providing the bubble forming flow path 156 and the reaction flow path 158 may be variously changed.

As another embodiment, the first guide 141 may be manufactured in a separate form, with one guide having the focusing flow path 142 formed and another guide having the inlet flow path 143 formed.

As another embodiment, the second guide 145 may be manufactured in a separate form, with one guide having the reduction flow path 147 formed and another guide having the connection flow path 148 formed.

As another embodiment, the guide assembly 140 may be manufactured as an integral part of the first guide 141 and the second guide 145.

As another embodiment, the guide assembly 140 may be formed as an integral part of the external body 110. In this case, the external body 110 may be formed as a form in which a through hole having a portion with a reduced diameter and a portion with an increased diameter is formed inside a single insulating material.

In addition, the bubble forming flow path 156 may be changed to a shape other than the illustrated shape in which the diameter is reduced at least in a portion along the flow direction of the fluid so as to form bubbles in the flowing fluid.

In addition, the reaction flow path 158 may be changed to a shape other than the illustrated shape that is configured to collapse bubbles included in the fluid.

In addition, the screw 130 may be omitted.

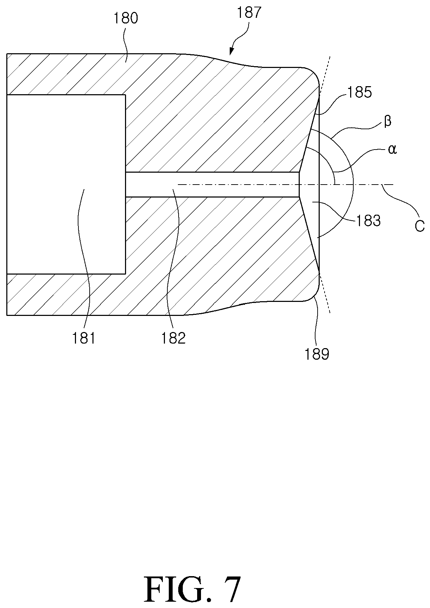

Meanwhile, FIG. 7 illustrates a second guide according to another embodiment.

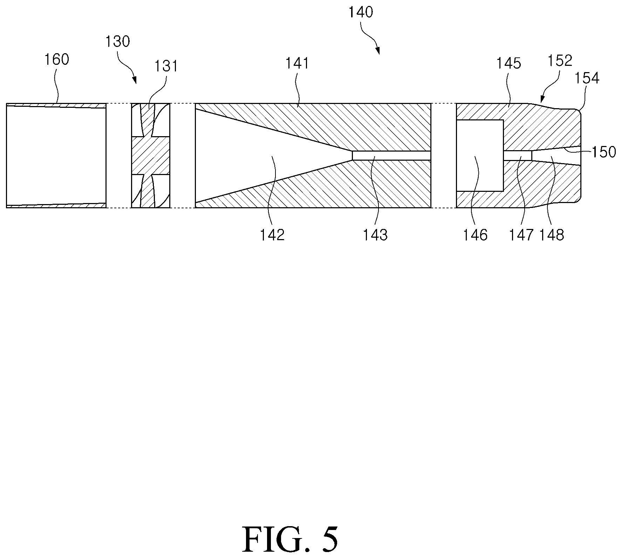

A second guide 180 illustrated in FIG. 7 has an expansion flow path 181, a reduction flow path 182, and a connection flow path 183. The expansion flow path 181 and the reduction flow path 182 may provide a reaction flow path for causing a rapid pressure change of the fluid to collapse bubbles B in the fluid. The expansion flow path 181 is connected to the inlet flow path 143 of the first guide (141; refer to FIG. 5), the reduction flow path 182 is connected to the expansion flow path 181, and the connection flow path 183 is connected to the reduction flow path 182]

The connection flow path 183 is formed in a form in which the diameter gradually increases along the flow direction A of the fluid. The connection flow path 183 has a diameter of a portion connected to the reduction flow path 182 that is the same as the diameter of the reduction flow path 182, and a diameter of a portion connected to the discharge flow path 113 that is larger than the diameter of the reduction flow path 182. It is preferable that the expanding inclination angle α of the connection flow path 183 be smaller than 80 degrees. The expanding inclination angle α of the connection flow path 183 may be defined as a half angle of the expansion angle β of the connection flow path 183. In addition, the expanding inclination angle α of the connection flow path 183 may be defined as an angle at which an inclined surface 185 provided on the inner surface of the second guide 180 is inclined from the center line C of the connection flow path 183. The inclined surface 185 of the second guide 180 is a portion of the inner surface of the second guide 180 that demarcates the perimeter of the connection flow path 183.

When the expanded inclination angle α of the connection flow path 183 exceeds 80 degrees, the flow rate of the fluid flowing through the connection flow path 183 into the discharge flow path 113 is excessively reduced, which is not desirable.

The second guide 180 is provided with an inclined portion 187 corresponding to the contact portion 122 of the external body 110. The specific configuration of the inclined portion 187 may be the same as the inclined portion 152 of the second guide 145 described above.

In addition, a curved round portion 189 is provided around the edge of the far end of the second guide 180. The specific configuration of the round portion 189 may be the same as the round portion 154 of the second guide 145 described above.

The second guide 180 according to the present embodiment has a larger expanding inclination angle α of the connection flow path 183 than the second guide 145 illustrated in FIG. 6. Therefore, when the second guide 180 according to the present embodiment is manufactured to have the same length as the second guide 145 of FIG. 6, the second guide 180 has the reduction flow path 182 that is longer than the reduction flow path 147 of the second guide 145 of FIG. 6. As the length of the reduction flow path 182 increases, the length of the reaction flow path for collapsing the bubbles B in the fluid also increases, so that the efficiency of plasma generation due to the collapse of the bubbles B in the fluid increases, and thus the fluid processing efficiency may be improved. That is, the second guide 180 according to the present embodiment may improve the fluid processing efficiency without increasing the length of the entire fluid processing device 100]

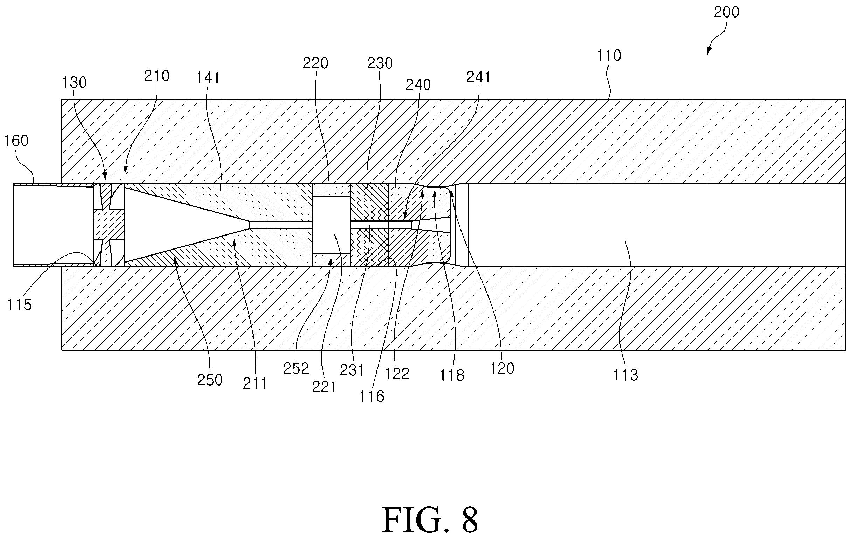

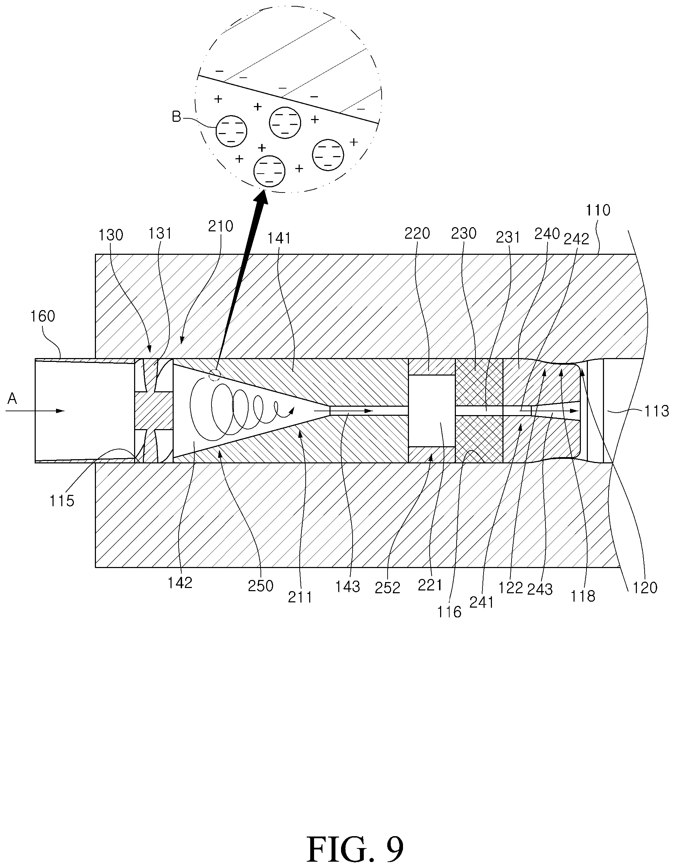

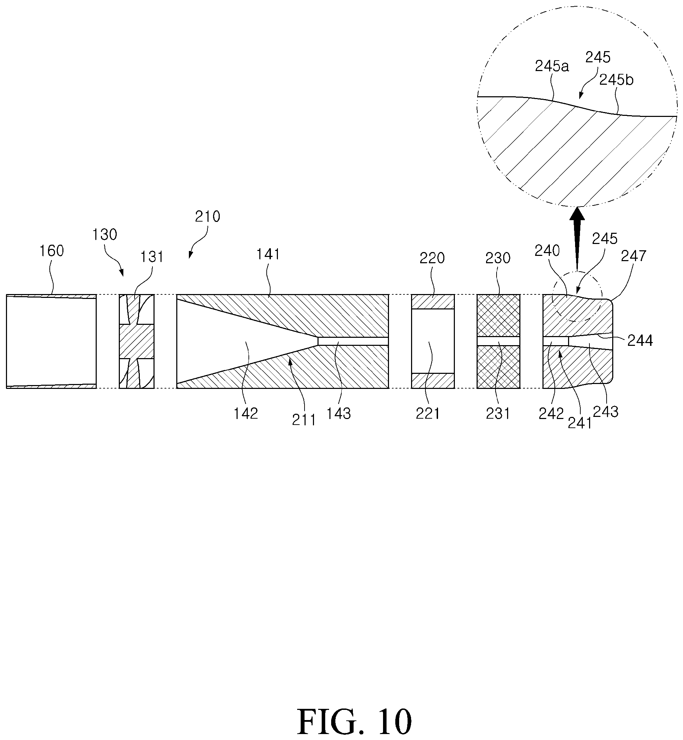

Meanwhile, FIG. 8 is a cross-sectional view illustrating a fluid processing device according to another embodiment of the present disclosure, FIG. 9 is an enlarged view of a part of FIG. 8, and FIG. 10 is a separate view of a portion of the fluid processing device illustrated in FIG. 8.

A fluid processing device 200 according to another embodiment of the present disclosure includes an external body 110, and a first body 210, a second body 220, a third body 230, and a fourth body 240 accommodated inside the external body 110. The first body 210 may provide a bubble forming flow path 250 for forming bubbles B in a fluid, and the second body 220 and the fourth body 240 may provide a reaction flow path 252 for collapsing bubbles B included in the fluid. The third body 230 may be disposed in the reaction flow path 252 to promote the collapse of bubbles B included in the fluid.

The external body 110 is formed as a hollow body that may accommodate the first body 210, the second body 220, the third body 230, and the fourth body 240. A discharge flow path 113 is provided inside the external body 110 into which the fluid passing through the fourth body 240 flows. The discharge flow path 113 is disposed on the downstream side of the fourth body 240 based on the flow direction A of the fluid. In addition, an entry flow path 115 in which the screw 130 of the first body 210 is accommodated, and an intermediate flow path 116 in which the third body 230 is accommodated are provided inside the external body 110. The entry flow path 115 is provided between the connecting tube 160 and the first guide 141 of the first body 210, and the intermediate flow path 116 is provided between the second body 220 and the fourth body 240.

In addition, a ledge 118 is provided inside the external body 110 to limit the movement of the fourth body 240. The ledge 118 includes an expansion portion 120 and a contact portion 122.

The specific configuration of the external body 110 is as described above.

The first body 210 includes a screw 130 and a first guide 141.

The screw 130 is disposed upstream of the first guide 141 based on the flow direction A of the fluid, and may cause the fluid to swirl and flow to the first guide 141. The screw 130 has a blade 131 for generating a vortex of the fluid.

The first guide 141 includes a focusing flow path 142 and an inlet flow path 143. The focusing flow path 142 and the inlet flow path 143 may form a first fluid flow path 211 having a shape in which the diameter decreases at least in a portion along the flow direction A of the fluid.

The screw 130 and the first guide 141 are as described above.

The second body 220 may be disposed in contact with the first guide 141 or adjacent to the first guide 141 so that the fluid passing through the first guide 141 flows into the second body 220. The second body 220 has a second fluid flow path 221. The fluid passing through the first fluid flow path 211 of the first body 210 flows into the second fluid flow path 221. The diameter of the second fluid flow path 221 is larger than the diameter of the inlet flow path 143. The pressure of the fluid passing through the narrow inlet flow path 143 decreases as the fluid flows into the second fluid flow path 221, and the bubbles B in the fluid may expand in the second fluid flow path 221.

The third body 230 may be disposed in contact with the second body 220 or adjacent to the second body 220 so that the fluid passing through the second body 220 flows into the third body 230. The third body 230 has a third fluid flow path 231. The diameter of the third fluid flow path 231 is smaller than the diameter of the second fluid flow path 221. Therefore, the pressure of the fluid passing through the second fluid flow path 221 increases as the fluid flows into the third fluid flow path 231, and the bubbles B in the fluid may be reduced in the third fluid flow path 231.

The third body 230 is made of a material having higher electrical conductivity than the first body 210, the second body 220, or the fourth body 240. For example, the third body 230 may be made of metal. The third body 230 may act as a storage body storing negative charges. In addition, the third body 230 may promote the collapse of bubbles B included in the fluid. That is, the third body 230 may promote the collapse of bubbles B by storing negative charges and applying a repulsive force to bubbles B where negative charges are concentrated at the interface. In addition, the third body 230 may promote the collapse of bubbles B where negative charges are concentrated at the interface by forming an electric field in the fluid. In addition, the third body 230 may induce plasma to be stably generated along the center of the reaction flow path 252 by concentrating the bubbles B at the center of the reaction flow path 252 by the repulsive force.

In this way, the third body 230 has a function of promoting the collapse of bubbles B and may be named as an accelerator or a metal insert.

The fourth body 240 may be disposed in contact with the third body 230 or adjacent to the third body 230 so that the fluid passing through the third body 230 may flow into the fourth body 240. The fourth body 240 has a fourth fluid flow path 241 through which the fluid flows to the discharge flow path 113.

The fourth fluid flow path 241 includes a reduction flow path 242 and a connection flow path 243. The reduction flow path 242 is connected to the third fluid flow path 231 of the third body 230. The diameter of the reduction flow path 242 may be the same as that of the third fluid flow path 231. The connection flow path 243 is formed in a form in which the diameter gradually increases along the flow direction A of the fluid. The connection flow path 243 has a diameter of a portion connected to the reduction flow path 242 that is equal to the diameter of the reduction flow path 242, and a diameter of a portion connected to the discharge flow path 113 that is larger than the diameter of the reduction flow path 242. In addition, the connection flow path 243 has a diameter of a portion connected to the discharge flow path 113 that is smaller than the diameter of the discharge flow path 113. The connection flow path 243 is formed in a shape that gradually expands from the reduction flow path 242 toward the discharge flow path 113, thereby enabling the fluid passing through the reduction flow path 242 to be discharged more smoothly to the discharge flow path 113.

The inner surface of the fourth body 240 is provided with an inclined surface 244 that is inclined with respect to the center line of the connection flow path 243 to demarcate the perimeter of the connection flow path 243. The connection flow path 243 may have an expanding inclination angle or an expansion angle of the same angle range as the expanding inclination angle α or the expansion angle β of the connection flow path 148 provided in the second guide 145 described above.

The fourth body 240 is provided with an inclined portion 245 corresponding to the contact portion 122 of the external body 110. The inclined portion 245 is provided on the outer surface of the fourth body 240 in a shape in which the outer diameter gradually decreases along the flow direction A of the fluid. A first inclined portion connecting portion 245a and a second inclined portion connecting portion 245b are respectively provided at both end portions of the inclined portion 245. The first inclined portion connecting portion 245a may be formed as a convex curved surface having a constant curvature radius. The second inclined portion connecting portion 245b may be formed as a concave curved surface having a constant curvature radius. For example, the first inclined connecting portion 245a may be formed as a curved surface having a first curvature radius, like the first contact portion connecting portion 122a of the contact portion 122, and the second inclined connecting portion 245b may be formed as a curved surface having a second curvature radius, like the second contact portion connecting portion 122b of the contact portion 122.

A curved round portion 247 is provided around the edge of the far end of the fourth body 240 adjacent to the expansion portion 120 of the external body 110. By providing the round portion 247 around the edge of the far end of the fourth body 240, it is possible to reduce the problem of charges being concentrated at the far end of the fourth body 240 or the fourth body 240 being damaged or broken due to the concentration of charges.

Similar to the round portion 154 of the second guide 145 described above, the round portion 247 of the fourth body 240 may have a curvature radius of 0.5 to 5 mm.

Hereinafter, the fluid processing process by the fluid processing device 200 according to the present embodiment will be described in more detail.

When high-pressure fluid is supplied from the fluid supply device (10; refer to FIG. 1), the high-pressure fluid flowing into the interior of the external body 110 first passes through the screw 130. The fluid flowing rapidly along the blade 131 of the screw 130 generates a vortex. In this case, a cavity phenomenon occurs due to a rapid change in fluid pressure, and this causes fine bubbles B to be generated in the fluid. The fluid passing through the screw 130 sequentially passes through the focusing flow path 142 and the inlet flow path 143 of the first guide 141 while generating a vortex. At this time, the fluid is frictionally charged with a positive charge, and a negative charge is concentrated on the interface of the bubbles B in the fluid.

The fluid passing through the first fluid flow path 211 flows into the second fluid flow path 221 of the second body 220, and the pressure is rapidly reduced. The bubbles B in the fluid may expand in the second fluid flow path 221. Subsequently, the fluid passing through the second fluid flow path 221 flows into the third fluid flow path 231 of the third body 230 and the reduction flow path 242 of the fourth body 240, and the pressure rapidly increases.

In this way, the fluid passing through the second fluid flow path 221, the third fluid flow path 231, and the fourth fluid flow path 241 undergoes rapid pressure changes, and the bubbles B in the fluid undergo an expansion and contraction process and collapse in large quantities. In this case, the collapse of the bubbles B may be promoted by the third body 230 applying a repulsive force to the bubbles B in the fluid. As the bubbles B in the fluid collapse in large quantities, plasma is generated in the fluid, and the fluid may be ionized or decomposed by the plasma generation.

Although the embodiments of the present disclosure have been described in detail with reference to the attached drawings, the present disclosure is not necessarily limited to these embodiments, and various modifications may be made within a scope that does not deviate from the technical idea of the present disclosure. Therefore, the embodiments disclosed in the present disclosure are not intended to limit the technical idea of the present disclosure, but to explain it, and the scope of the technical idea of the present disclosure is not limited by these embodiments. Therefore, the embodiments described above should be understood as being exemplary and not restrictive in all aspects. All technical ideas within a scope equivalent thereto should be interpreted as being included in the scope of the rights of the present disclosure.

## Claims

1. A fluid processing device comprising:
a hollow external body;
a guide assembly accommodated in the external body to provide a first flow path having a shape in which a diameter is reduced in at least a portion thereof along a flow direction of a fluid and a second flow path having a shape in which a diameter expands in at least a portion thereof to collapse bubbles included in the fluid having passed through the first flow path; and
a screw accommodated in the external body to be positioned upstream of the guide assembly based on the flow direction of the fluid to generate a vortex of the fluid,
wherein an inner surface of the external body includes an expansion portion whose diameter gradually expands in a direction away from a far end of the guide assembly.

2. The fluid processing device in claim 1, wherein the expansion portion is formed in a curved shape.

3. The fluid processing device in claim 1, wherein a first expansion portion connecting portion and a second expansion portion connecting portion having a curved shape are respectively provided on both end portions of the expansion portion.

4. The fluid processing device in claim 1, wherein a curved round portion is provided around an edge of the far end of the guide assembly adjacent to the expansion portion.

5. The fluid processing device in claim 4, wherein the round portion is configured in a curved surface having a curvature radius of 0.5 to 5 mm.

6. The fluid processing device in claim 1, wherein the guide assembly includes an inclined portion whose outer diameter is gradually reduced along the flow direction of the fluid, and
the external body includes a contact portion that protrudes from the inner surface of the external body and is in contact with the inclined portion to restrain a movement of the guide assembly so as not to move in the flow direction of the fluid.

7. The fluid processing device in claim 6, wherein the contact portion is configured in a shape whose inner diameter is gradually reduced along the flow direction of the fluid so as to come into contact with the inclined portion.

8. The fluid processing device in claim 6, wherein a first inclined portion connecting portion having a convex curved surface having a first curvature radius is provided in one end portion of the inclined portion, a second inclined portion connecting portion having a concave curved surface having a second curvature radius is provided in the other end portion of the inclined portion, and
a first contact portion connecting portion having a concave curved surface having the first curvature radius is provided in one end portion of the contact portion to come into contact with the first inclined portion connecting portion, and a second contact portion connecting portion having a convex curved surface having the second curvature radius is provided in the other end portion of the contact portion.

9. The fluid processing device in claim 8, wherein the first curvature radius is 1 to 20 mm.

10. The fluid processing device in claim 1, wherein the first flow path includes
a focusing flow path in which the fluid passing through the screw is introduced, and whose diameter is gradually reduced along the flow direction of the fluid, and
an inlet flow path which is connected to a far end of the focusing flow path so that the fluid is introduced from the focusing flow path and has a diameter equal to a diameter of the far end of the focusing flow path.

11. The fluid processing device in claim 10, wherein the second flow path includes
an expansion flow path connected to the inlet flow path so that the fluid is introduced from the inlet flow path and having a diameter larger than the diameter of the inlet flow path, and
a reduction flow path connected to the expansion flow path so that the fluid is introduced from the expansion flow path and having a diameter smaller than the diameter of the expansion flow path.

12. The fluid processing device in claim 1, wherein the guide assembly includes a connection flow path which is connected to the first flow path so that the fluid passing through the first flow path is introduced and of which a diameter is gradually expanded along the flow direction of the fluid, and
a discharge flow path is provided inside the external body, the discharge flow path being connected to the connection flow path so that the fluid passing through the connection flow path is introduced and having a diameter is larger than the diameter of the expansion flow path and the diameter of the connection flow path.

13. The fluid processing device in claim 12, wherein an expanding inclination angle of the connection flow path is greater than 0 degrees and smaller than 80 degrees.

14. The fluid processing device in claim 1, wherein the guide assembly is made of a material that frictionally charges the fluid with a positive charge.

15. The fluid processing device in claim 1, further comprising an accelerator that is accommodated in the external body and promotes the collapse of bubbles contained in the fluid.

16. The fluid processing device in claim 15, wherein the accelerator is formed in the shape of a metal ring.

17. A fluid processing device comprising:
a hollow external body;
a first body that includes a screw and a first fluid flow path which guides a flow of fluid passing through the screw and has a shape in which the diameter is reduced at least in a portion along a flow direction of the fluid, and that is accommodated in the external body;
a second body that is connected to the first body and includes a second fluid path having a relatively larger diameter than one end of the first fluid path to provide a change in pressure to the fluid passing through the first fluid path; and
a third body including a third fluid path that is connected to the second body, formed of a material having higher electrical conductivity than the second body, and has a third fluid path having a relatively smaller diameter than the second fluid path to provide a change in pressure to the fluid passing through the second fluid path,
wherein an expansion portion positioned downstream from the third body based on the flow direction of the fluid and having a shape in which a diameter is gradually expands is provided on an inner surface of the external body.

18. The fluid processing device according to claim 17, further comprising a fourth body connected to the third body and having a fourth fluid path into which the fluid passing through the third fluid path is introduced,
wherein a curved round portion is provided around an edge of a far end of the fourth body adjacent to the expansion portion.

19. The fluid processing device according to claim 18, wherein the round portion is configured in a curved shape having a curvature radius of 0.5 to 5 mm.

20. The fluid processing device according to claim 17, further comprising a fourth body connected to the third body and having a fourth fluid path into which the fluid passing through the third fluid path is introduced,
wherein at least a portion of the fourth fluid path is formed in a shape in which a diameter gradually expands along the flow direction of the fluid, and
an expanding inclination angle of the expanded portion of the fourth fluid path is greater than 0 degrees and less than 80 degrees.
